# FASCICULE DE BREVET EUROPEEN

(11) **EP 0 571 294 B1**
(45) Date de publication et mention de la délivrance du brevet: **08.01.1997**
(21) Numéro de dépôt: 93401311.1
(22) Date de dépôt: 21.05.1993
(51) Int. Cl.: F16L 33/08

(54) **Collier de serrage à vis**
Gewindeklemmschelle
Pipe clamp provided with a screw

(30) Priorité: 22.05.1992 FR 9206319
(43) Date de publication de la demande: 24.11.1993
(73) Titulaire: Etablissements CAILLAU, F-92130 Issy-les-Moulineaux (FR)
(72) Inventeur: Chene, Richard, F-41320 Mennetou sur Cher (FR); Dupin, Pierre, F-41200 Romorantin Lanthenay (FR); Corvello, Fabienne, F-41200 Romorantin Lanthenay (FR)
(74) Mandataire: Descourtieux, Philippe

(56) Documents cités:
- WO-A-80/01199
- WO-A-87/00602
- DE-C- 3 941 135
- US-A- 2 504 836
- US-A- 2 522 494

## Description

On connaît déjà, notamment par les brevets US-A-2 522 494 et DE-A-41.08.852 ou encore par les demandes internationales publiées WO 80/01199 et WO 87/00602, un collier de serrage constitué par une bande de matériau flexible, en général du métal, enroulée sur elle-même. L'une des extrémités de la bande présente, au moins sur sa surface extérieure, une succession régulière de reliefs et/ou de creux formant une crémaillère. Sur l'autre extrémité de la bande est fixée une cosse (ou capot) présentant essentiellement deux flancs latéraux et constituant le support d'une vis qui y est montée pivotante autour de son axe. Ce dernier est lui-même sensiblement parallèle à la direction longitudinale de la bande, c'est-à-dire à une tangente au collier lorsque la bande est enroulée sur elle-même. La position longitudinale de la vis par rapport à la cosse ou capot est variable et déterminée par au moins une butée, mobile axialement par rapport à la cosse, contre l'action d'un ressort. Sur cette butée prend appui une zone appropriée de la queue de la vis. Dans certains cas, le maintien de la vis dans la cosse est obtenu grâce à une forme approximativement cylindrique de cette dernière, dans d'autres cas, il peut être prévu deux paliers recevant la tige filetée de la vis, respectivement au voisinage de sa tête et de sa queue.

La cosse présente enfin une fente transversale par laquelle pénètre l'extrémité libre de la bande dont les reliefs viennent en prise avec les filets de la vis, ce qui permet le serrage du collier par rotation de la vis grâce à un outil approprié.

Ce type de collier à vis est très utilisé dans l'industrie, notamment si l'on souhaite compenser automatiquement une éventuelle diminution du diamètre de l'objet serré mais il présente en général au moins un grave inconvénient.

En effet, ces colliers connus ne permettent pas un *"rattrapage des jeux"* au moment du serrage ; dans certains cas on peut alors constater que les filets de la vis se dégagent de la crémaillère de la bande, empêchant ainsi la poursuite du serrage du collier.

Le brevet DE-C-39 41 135 décrit un collier dans lequel le ressort est constitué par une lame courbe dont la concavité est dirigée vers l'intérieur du collier. Une première extrémité est axialement fixée à la cosse et est munie d'une ouverture. De part et d'autre de cette ouverture subsistent deux jambes qui se fixent sur la cosse à la manière d'un étrier. La deuxième extrémité de la lame entoure la tige de la vis au voisinage de sa tête et forme une butée mobile sur laquelle prend appui cette tête.

Avec cette disposition, le risque subsiste que les filets de la vis se dégagent de la crémaillère de la bande. De plus, la lame courbe est en totalité en dehors de la cosse.

La présente invention se propose d'améliorer encore un collier de ce type pour, dans une construction compacte et fiable, permettre un rattrapage des jeux et empêcher que les filets de la vis ne se dégagent de la crémaillère.

Selon l'invention, pour un collier du type défini par le préambule de la revendication 1, qui est connu de DE-C-39 41135, les extrémités de la lame sont latéralement au contact des flancs latéraux de la cosse, la lame est emprisonnée entre ces flancs latéraux, la deuxième extrémité de la lame est montée coulissante par rapport aux flancs de la cosse et l'ouverture de la première extrémité de la lame constitue, pour la queue de la vis, un palier dans lequel cette queue peut coulisser.

L'invention sera mieux comprise et ses avantages apparaîtront au cours de la description qui va suivre d'un mode de réalisation donné uniquement à titre d'exemple. A cet effet, on se référera au dessin annexé dans lequel :
- La figure 1 est une vue en élévation et de côté d'un collier selon l'invention.
- La figure 2 est une vue analogue à la figure 1, une paroi latérale de la cosse étant arrachée.
- La figure 3 est une vue suivant flèche ***F*** de la figure 1.

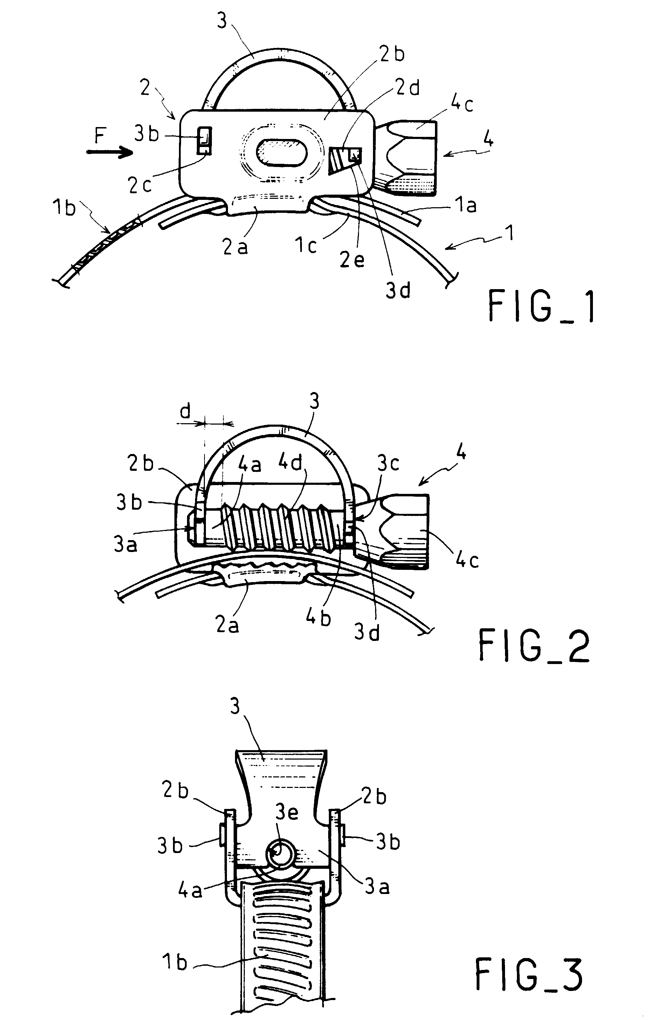

Si l'on se reporte aux figures 1 à 3, on voit un collier à vis constitué par une bande 1 en général métallique, enroulée sur elle-même et présentant, au moins à son extrémité extérieure 1a des creux et reliefs formant une crémaillère ***1b.*** Sur l'extrémité intérieure ***1c*** est fixée une cosse ***2*** constituée par un simple étrier en **U** dont le fond ***2a*** situé dans la zone centrale de la cosse, est assemblé à la bande par tout moyen approprié, tel que soudage ou rivetage, ou même par passage de la bande dans des fentes dudit fond.

Entre les flancs latéraux ***2b*** de la cosse est disposée une lame courbe *3*, généralement en acier à ressort, par exemple de profil semi-circulaire, dont la concavité est dirigée vers l'intérieur du collier. Les extrémités de la lame sont au contact des flancs de la cosse et la lame se trouve ainsi emprisonnée entre ceux-ci.

Une première extrémité, désignée par ***3a*** et située à gauche sur les figures 1 et 2, est fixée à la cosse. A cet effet, la lame ***3*** présente deux extensions latérales ***3b*** qui pénètrent dans des trous ***2c*** ménagés sur chacun des flancs ***2b***. De préférence, les saillies des extensions latérales ***3b*** sont matées sur la face extérieure des parois ***2b*** ou présentent une forme en crochet pour assurer leur verrouillage sur ces flancs.

A son extrémité opposée ***3c***, la lame ***3*** présente avantageusement deux extensions latérales ***3d*** disposées dans des fentes allongées ***2d*** des flancs latéraux ***2b*** de la cosse.

Ainsi, la lame ***3*** est immobilisée axialement par rapport à la cosse ***2*** à son extrémité ***3a*** mais est mobile axialement à son extrémité ***3b***, au moins sur la longueur axiale des fentes ***2d*** formant glissière. Pour des raisons qui apparaîtront plus loin, le bord inférieur ***2e*** des fentes ***2d*** est avantageusement incliné en direction de la zone centrale de la cosse.

Une vis ***4*** est enfin disposée entre les flancs latéraux ***2b*** de la cosse et son axe est sensiblement parallèle au fond ***2a*** de la cosse, c'est-à-dire à la direction longitudinale de la bande dans cette région ; elle est maintenue dans son logement par les extrémités ***3a*** et ***3c*,** judicieusement conformées, de la lame ***3***.

En effet, l'extrémité ***3a*** présente une ouverture au moins partiellement circulaire ***3e***, formant palier, dans laquelle est engagée l'extrémité cylindrique de la queue ***4a*** de la vis ***4***. D'autre part, l'extrémité ***3c*** est conformée de façon analogue et peut recevoir également une portion cylindrique ***4b*** de la tige de la vis, située au voisinage de sa tête ***4c.***

On soulignera ici que la portion cylindrique ***4a*** de la queue de la vis s'étend, en deçà de l'extrémité ***3a*** de la lame ***3***, sur une certaine distance ***d*** lorsque la tête ***4c*** de la vis est en appui, avant serrage du collier, sur l'extrémité mobile ***3c*** de la lame. En pratique, il sera avantageux, pour des raisons qui apparaîtront plus loin, que la distance ***d*** soit voisine de la longueur axiale de la glissière ***2d.***

Entre les extrémités internes des portions cylindriques ***4a*** et ***4b*** est située la zone filetée ***4d*** de la vis.

La bande ***1*** étant fixée à la cosse ***2*** comme il a été décrit, son extrémité extérieure ***1a*** est introduite, par la gauche des figures 1 et 2, dans la fente située entre le fond ***2a*** de la cosse et la zone filetée ***4d*** de la vis. Une rotation de la vis ***4*** dans le sens convenable fait avancer l'extrémité ***1a*** de la gauche vers la droite et diminue le diamètre du collier.

Lorsque le collier est monté sur l'objet à serrer, la poursuite du mouvement de rotation de la vis ***4*** provoque le serrage, la tête ***4c*** de la vis prenant appui sur la butée que constitue l'extrémité ***3c*** de la lame ***3***. Au fur et à mesure que le serrage devient plus intense, la lame ***3*** se déforme sous l'effet de la force exercée par la tête de vis ***4c*** sur l'extrémité ***3c***, celle-ci se rapprochant quelque peu de l'extrémité ***3a*** fixée à la cosse ***2***.

Les caractéristiques de la lame ***3*,** qui forme ainsi ressort, seront déterminées en fonction de l'effort de serrage qui doit être appliqué à l'objet à serrer ; de même, le couple de vissage exercé sur la tête de la vis ***4*** tiendra compte de l'effort de serrage désiré, notamment s'il est obtenu au moyen d'une visseuse motorisée. Il est ainsi possible de limiter l'effort de serrage à toute valeur convenable.

D'autre part, après le vissage approprié, la distance ***d*** visible sur la figure 2 aura notablement diminué de sorte que la lame ***3*** sera comprimée.

Si, en cours d'utilisation, le diamètre de l'objet serré venait à diminuer, la lame ***3*** tendrait à reprendre sa forme initiale, assurant ainsi le maintien d'un serrage suffisant.

Ainsi que l'homme du métier l'a déjà compris, la fabrication des colliers selon l'invention est particulièrement simple.

La cosse présente essentiellement des trous ou analogues destinés à recevoir les extensions latérales des extrémités de la lame pour assurer l'immobilisation de l'une de ces extrémités et permettre le déplacement axial de l'autre. L'assemblage du fond de la cosse et de la bande du collier étant réalisé ainsi que celui de la lame et de la vis, ces deux sous-ensembles sont assujettis l'un à l'autre par un simple pliage des flancs latéraux de la cosse ; cette seule opération constitue l'étrier qui emprisonne la lame et la vis, le collier étant alors prêt à être utilisé. Toutefois, cette opération qui peut être réalisée sur des presses

automatiques par une succession d'opérations de pliage et d'emboutissage, laisse néanmoins subsister des *"jeux",* par exemple pour les extrémités ***3a*** et ***3c*** de la lame entre les flancs latéraux ***2b*** de la cosse et pour les extensions latérales ***3b*** dans les trous ***2c.*** Au cours du serrage l'inclinaison des filets de la vis par rapport à l'axe de la bande provoque un léger déplacement latéral de la vis, permettant de *"rattraper les jeux" ;* simultanément et surtout en raison du point d'appui radial que constitue le palier fixe ***3e***, la déformation de la lame 3 tend à faire pivoter la tête ***4c*** de la vis vers la bande puisque les extensions ***3d*** peuvent se déplacer dans les glissières ***2d.*** Grâce à cet effet, les filets de la vis sont de plus en plus fortement appliqués sur la crémaillère au cours du serrage. Ce pivotement de la tête ***4c*** de la vis est facilité par l'inclinaison du bord inférieur des glissières ***4d.***

## Revendications

1. Collier de serrage constitué par une bande ***(1)*** de matériau, en général un métal, enroulée sur elle-même, l'une des extrémités de ladite bande présentant des reliefs formant une crémaillère ***(1b),*** tandis que sur l'autre extrémité est fixée une cosse ***(2)*** dans laquelle est supportée une vis ***(4)*** pivotante autour de son axe, ladite vis prenant appui sur une butée mobile axialement par rapport à la cosse contre l'action d'un ressort constitué par une lame courbe ***(3)***, par exemple en forme de demi-cercle, dont la concavité est dirigée vers l'intérieur du collier, une première extrémité ***(3a)*** de ladite lame étant axialement fixée à la cosse et munie d'une ouverture ***(3e)***, tandis que la deuxième extrémité ***(3c)*** de la lame entoure au moins partiellement la tige ***(4b)*** de la vis au voisinage de sa tête ***(4c)*** et constitue ladite butée mobile sur laquelle prend appui la tête de la vis, caractérisé en ce que les extrémités ***(3a***, ***3c)*** de la lame **(3)** sont latéralement au contact des flancs latéraux ***(2b)*** de la cosse ***(2)***, et en ce que la lame est emprisonnée entre ces flancs latéraux, la deuxième extrémité ***(3c)*** étant montée coulissante par rapport auxdits flancs ***(2b)*** et l'ouverture ***(3e)*** de la première extrémité ***(3a)*** de la lame ***(3)*** constituant, pour la queue ***(4a)*** de la vis ***(4)***, un palier dans lequel ladite queue peut coulisser.

2. Collier selon la revendication 1, caractérisé en ce que à sa première extrémité ***(3a)*** la lame ***(3)*** présente deux extensions latérales ***(3b)*** engagées dans des trous de forme complémentaire ***(2c)*** prévus dans les flancs latéraux ***(2b)*** de la cosse ***(2)***.

3. Collier selon la revendication 1, caractérisé en ce que à sa deuxième extrémité ***(3c)*** la lame ***(3)*** présente deux extensions latérales ***(3d)*** engagées dans des glissières axiales ***(2d)*** ménagés dans les flancs latéraux ***(2b)*** de la cosse ***(2)*.**

4. Collier selon la revendication 3, caractérisé en ce que le bord inférieur ***(2e)*** d'une glissière ***(2d)*** est incliné en direction de la zone centrale ***(2a)*** de la cosse.

## Patentansprüche

1. Klemmschelle, gebildet durch ein aufgerolltes, im allgemeinen aus Metall bestehendes Band, wobei eines der Enden des Bandes mit zusammen eine Zahnstange (1b) bildenden Erhöhungen versehen ist, während am anderen Ende eine Hülse (2) befestigt ist, in der eine um ihre Achse drehbare Schraube (4) gehalten ist, welche an einem axial zur Hülse gegen die Wirkung einer durch eine beispielsweise halbkreisförmig gebogene, mit ihrer Konkavität zum Inneren der Schelle gerichtete Lamelle (3) gebildeten Feder beweglichen Anschlag anliegt, wobei ein erstes Ende (3a) der Lamelle an der Hülse axial fixiert und mit einer Öffnung (3e) versehen ist, während das zweite Ende (3c) der Lamelle den Schaft (4b) der Schraube in der Nähe ihres Kopfes (4c) zumindest teilweise umgibt und den beweglichen Anschlag, an dem der Kopf der Schraube anliegt, bildet, dadurch gekennzeichnet, daß die Enden (3a, 3c) der Lamelle (3) seitlich in Kontakt mit Seitenwänden (2b)'der Hülse (2) sind und daß die Lamelle zwischen diesen Seitenwänden eingeschlossen ist, wobei das zweite Ende (3c) gegenüber den Seitenwänden (2c) gleitend angeordnet ist und die Öffnung (3e) des ersten Endes (3a) der Lamelle (3) für das Endstück (4a) der Schraube (4) ein Lager bildet, in dem das Endstück gleiten kann.

2. Klemmschelle nach Anspruch 1, dadurch gekennzeichnet, daß die Lamelle (3) an ihrem ersten Ende (3a) zwei seitliche Erweiterungen (3b) aufweist, die in in den Seitenwänden (2b) der Hülse (2) vorgesehene Ausnehmungen komplementärer Form (2c) eingreifen.

3. Klemmschelle nach Anspruch 1, dadurch gekennzeichnet, daß die Lamelle (3) an ihrem zweiten Ende (3c) zwei seitliche Erweiterungen (3d) aufweist, die in in den Seitenwänden (2b) der Hülse (2) vorgesehene axiale Gleitbahnen (2d) eingreifen.

4. Klemmschelle nach Anspruch 3, dadurch gekennzeichnet, daß der untere Rand (2e) einer Gleitbahn (2d) in Richtung der Mittelzone (2a) der Hülse geneigt ist.

## Claims

1. A hose clamp constituted by a band (1) of material, generally metal, wound on itself, one of the ends of said band presenting relief elements forming a rack (1b), whilst on the other end is fixed a housing (2) which constitutes the support of a screw (4) which is mounted to pivot about its axis, said screw abutting on a stop axially mobile with respect to the housing against the action of a spring constituted by a curved blade (3), for example in the form of a semi-circle, whose concavity faces the inside of the clamp, a first end (3a) of said blade being axially fixed to the housing and provided with an opening (3e), whilst the second end (3c) of the blade surrounds at least partially the shank (4b) of the screw in the vicinity of its head (4c) and constitutes said mobile stop on which abuts the head of the screw, characterized in that the ends (3a, 3c) of the blade (3) are laterally in contact with the lateral sides (2b) of the housing (2), and in that the blade is captive between said lateral sides, the second end (3c) being mounted to slide with respect to said sides (2b) and the opening (3e) of the first end (3a) of the blade (3) constituting, for the tail (4a) of the screw (4), a bearing in which said tail may slide.

2. The clamp according to Claim 1, characterized in that, at its first end (3a), the blade (3) presents two lateral extensions (3b) engaged in holes of complementary shape (2c) provided in the lateral sides (2b) of the housing (2).

3. The clamp according to Claim 1, characterized in that, at its second end (3c), the blade (3) presents two lateral extensions (3d) engaged in axial slideways (2d) made in the lateral sides (2b) of the housing (2).

4. The clamp according to Claim 3, characterized in that the lower edge (2e) of a slideway (2d) is inclined in the direction of the central zone (2a) of the housing.
